# EUROPÄISCHE PATENTANMELDUNG

(11) **EP 3 503 350 A1**
(43) Veröffentlichungstag der Anmeldung: **26.06.2019**
(21) Anmeldenummer: 18210323.4
(22) Anmeldetag: 05.12.2018
(51) Int. Cl.: H02J 50/12, H02J 7/02, B60L 5/00, H02J 5/00, H02J 50/60, B60L 53/12, B60L 53/38, B60L 53/60, B60L 53/124, B60L 55/00

(54) **INDUKTIVE LADEANORDNUNG FÜR KRAFTFAHRZEUGE**

(30) Priorität: 20.12.2017 DE 102017130768
(71) Anmelder: Zollner Elektronik AG, 93499 Zandt (DE)
(72) Erfinder: Preis, Daniel, 93426 Roding (DE)
(74) Vertreter: Bittner, Bernhard

(57) **Zusammenfassung**

Induktive Ladeanordnung (1) für Kraftfahrzeuge mit einer ersten Induktionsvorrichtung (2), welche insbesondere stationär angeordnet ist und einer zweiten Induktionsvorrichtung (4), welche an dem Kraftfahrzeug montierbar ist, wobei die erste Induktionsvorrichtung(2) eine erste Spuleneinrichtung (22) aufweist und die zweit Induktionsvorrichtung (4) eine zweite Spuleneinrichtung (42) und die erste Spuleneinrichtung (22) und die zweite Spuleneinrichtung (42) zur induktiven Energieübertragung geeignet und bestimmt sind. Erfindungsgemäß ermöglicht die Ladeanordnung (1) sowohl eine induktive Energieübertragung von der ersten Spuleneinrichtung (22) zu der zweiten Spuleneinrichtung (42) als auch eine induktive Energieübertragung von der zweiten Spuleneinrichtung (42) zu der ersten Spuleneinrichtung (22).

## Beschreibung

Die vorliegende Erfindung bezieht sich auf eine induktive Ladeanordnung für Kraftfahrzeuge. Aus dem Stand der Technik sind seit Längerem elektrisch betriebene Fahrzeuge bekannt. Dabei ist es seit Langem bekannt, dass diese Fahrzeuge geladen werden, indem der Benutzer ein Kabel an eine speziell hierfür vorgesehene Steckdose ansteckt. In jüngerer Zeit sind auch induktive Ladesysteme für Kraftfahrzeuge bekannt geworden. Diese bieten den Vorteil, dass der Fahrer das Auto nicht mehr verlassen muss, wenn dieses geladen werden soll.

Derartige induktive Ladesysteme oder Ladeanordnungen weisen üblicherweise eine Sendespule beispielsweise in oder auf einem Boden auf sowie eine Empfangsspule, welche im Kraftfahrzeug angeordnet ist. In Zukunft ist mit einem weitaus höheren Aufkommen an derartigen Elektrofahrzeugen zu rechnen. Aus diesem Grunde kann es sein, dass es in manchen Zeiten zu einer Überbelastung entsprechender Stromnetze kommt und zu anderen Zeiten eine Überversorgung an elektrischer Energie zur Verfügung steht.

Daher liegt der vorliegenden Erfindung die Aufgabe zugrunde, entsprechende unterschiedliche Lastzeiten, zu denen mehr oder weniger elektrische Energie zur Verfügung steht, besser zu nutzen. Dies wird erfindungsgemäß durch eine induktive Ladeanordnung nach dem unabhängigen Anspruch erreicht. Vorteilhafte Ausführungsformen und Weiterbildungen sind Gegenstand der Unteransprüche.

Eine induktive Ladeanordnung insbesondere für Kraftfahrzeuge weist eine erste Induktionsvorrichtung auf, welche insbesondere stationär angeordnet ist sowie eine zweite Induktionsvorrichtung, welche an dem Kraftfahrzeug montierbar ist. Dabei weist die erste Induktionsvorrichtung eine erste Spuleneinrichtung auf und die zweite Induktionsvorrichtung weist eine zweite Spuleneinrichtung auf. Die erste und die zweite Spuleneinrichtung sind zur induktiven Energieübertragung geeignet und bestimmt.

Erfindungsgemäß erlaubt die Ladeanordnung sowohl eine induktive Energieübertragung von der ersten Spuleneinrichtung zu der zweiten Spuleneinrichtung als auch eine induktive Energieübertragung von der zweiten Spuleneinrichtung zu der ersten Spuleneinrichtung. Es wird daher vorgeschlagen, dass ein Ladestrom nicht nur von der üblicherweise als stationär angeordneten Spule auf das Kraftfahrzeug übertragen wird, sondern umgekehrt auch von dem Kraftfahrzeug zurückgespeist werden kann. Auf diese Weise kann zu Zeiten, zu denen ein Kraftfahrzeug nicht benötigt wird, gegebenenfalls auch aus einer Batterie Strom rückgeführt werden. Auf diese Weise können Lastspitzen leichter bewältigt werden.

Es ist damit bevorzugt ein Energiefluss in beiden Richtungen möglich, das heißt sowohl von dem Kraftfahrzeug hin zu der ersten Induktionsvorrichtung als umgekehrt von der ersten Induktionsvorrichtung zu der zweiten Induktionsvorrichtung. So ist sowohl eine uni- als auch bidirektionale Übertragung von elektrischer Energie möglich.

Bei einer weiteren vorteilhaften Ausführungsform weist die erste Induktionsvorrichtung eine erste Gleichspannungs-Wandler-Einrichtung auf. Bevorzugt handelt es sich dabei um einen DC-DC-Wandler. Dieser dient besonders bevorzugt zur Leistungsregulierung. Bei dieser Wandlereinrichtung kann es sich um einen Aufwärtswandler oder einen Abwärtswandler handeln. Auch kann die Wandlereinrichtung als eine Mischform aus einem Aufwärtswandler und einem Abwärtswandler ausgebildet sein.

Bei einer weiteren vorteilhaften Ausführungsform weist die zweite Induktionsvorrichtung eine zweite Gleichspannungs-Wandler-Einrichtung auf. Bevorzugt ist damit hier ein zweiter DC-DC-Wandler vorgesehen, der insbesondere zu Anpassung an die Fahrzeugbatterie geeignet und bestimmt ist. Vorteilhaft weisen also sowohl die erste Induktionsvorrichtung als auch die zweite Induktionsvorrichtung jeweils eine Gleichspannungs-Wandler-Einrichtung auf. Diese Gleichspannungs-Wandler-Einrichtung kann dabei beispielsweise einem Inverter und/oder einem Resonanzkreis vorgeschaltet sein.

Bei einer weiteren vorteilhaften Ausführungsform weist die erste Induktionsvorrichtung und/oder die zweite Induktionsvorrichtung einen Resonanzkreis auf. Dieser Resonanzkreis dient dabei besonders bevorzugt zur Impedanzanpassung. So können beispielsweise die beiden Resonanzkreise dazu dienen, die jeweiligen Übertragungsfrequenzen einander anzupassen.

Bei einer weiteren vorteilhaften Ausführungsform ist wenigstens ein Resonanzkreis dazu geeignet und bestimmt, Energie mittels eines Wechselfeldes zu übertragen, dessen Frequenz größer ist als 30 kHz, bevorzugt größer als 50 kHz, bevorzugt größer als 60 kHz, bevorzugt größer als 70 kHz und besonders bevorzugt größer als 80 kHz. Bevorzugt ist wenigstens ein Resonanzkreis dazu geeignet und bestimmt, Energie mittels eines Wechselfeldes zu übertragen, dessen Frequenz kleiner ist als 200 kHz, bevorzugt kleiner als 170 kHz, bevorzugt kleiner als 150 kHz, bevorzugt kleiner als 120 kHz, bevorzugt kleiner als 100 kHz und besonders bevorzugt kleiner als 90 kHz. Bevorzugt weist wenigstens die zweite Induktionsvorrichtung einen derartigen Resonanzkreis auf. Bei einer weiteren vorteilhaften Ausführungsform weisen beide Induktionsvorrichtungen einen derartigen Resonanzkreis auf.

Bei einer weiteren vorteilhaften Ausführungsform weist die Ladeanordnung eine Erfassungseinrichtung auf, welche einen Ladezustand einer Fahrzeugbatterie erfasst. Bevorzugt ist auch eine Steuerungseinrichtung vorgesehen, welche einen Ladevorgang auch in Abhängigkeit von einem Ladezustand einer KFZ-Batterie steuert. Dabei kann insbesondere auch ein Energiefluss von der Kraftfahrzeugbatterie in ein Netz gesteuert werden.

Bei einer weiteren vorteilhaften Ausführungsform weist wenigstens die erste Induktionsvorrichtung und/oder die zweite Induktionsvorrichtung eine Positionserfassungseinrichtung auf, welche dazu geeignet und bestimmt ist, eine Relativposition der ersten Induktionsvorrichtung gegenüber der zweiten Induktionsvorrichtung zu erfassen. Besonders bevorzugt weisen beiden Induktionsvorrichtungen jeweils eine Positionserfassungseinrichtung auf. Auf diese Weise kann ein zu großer Versatz zwischen der ersten und der zweiten Induktionsvorrichtung bzw. zwischen der ersten und der zweiten Spuleneinrichtung verhindert werden. Auf diese Weise kann insbesondere ein stabiler Ladebetrieb sichergestellt werden. Daneben kann auch eine außerordentliche Abstrahlung eines Magnetfeldes verhindert werden. Weiterhin kann wenigstens eine Positionserfassungseinrichtung Sende- und/oder Empfangsantennen aufweisen, die eine genaue Positionierung in einem Ladebereich sicherstellen. So können beispielsweise vier derartige Antennen vorgesehen sein, sodass sichergestellt wird, dass ein entsprechendes Gegenstück, beispielsweise die zweite Induktionsvorrichtung, innerhalb dieser vier Ladeantennen positioniert wird. Bei einer bevorzugten Ausführungsform kann eine derartige Positionserfassungseinrichtung eine Feldstärkenmesseinrichtung aufweisen, welche von diesen Antennen ausgehende Signale ermittelt und so eine vorgegebene Idealposition der ersten Induktionsvorrichtung gegenüber der zweiten Induktionsvorrichtung ermittelt. So könnten etwa vier Antennen an den Eckpunkten eines Rechtecks angeordnet sein, um so die Position genau bestimmen zu können.

Dabei ist es denkbar, dass die hier erwähnten Elektronikkomponenten jeweils in einem eigenen Gehäuse untergebracht sind. Es wäre jedoch auch möglich, dass die jeweiligen Elektronikbauteile ein Teil der Boden- und/oder Fahrzeugspule sind. Bei einer weiteren vorteilhaften Ausführungsform weist die erste Induktionsvorrichtung und/oder die zweite Induktionsvorrichtung ein Ferritelement und insbesondere wenigstens eine Ferritplatte auf.

Bei einer weiteren vorteilhaften Ausführungsform weist wenigstens eine Induktionsvorrichtung und bevorzugt die erste Induktionsvorrichtung eine Erkennungseinrichtung zum Erkennen von Fremdobjekten auf. Bei diesen Fremdobjekten kann es sich beispielsweise um metallische Fremdkörper handeln, welche einen Ladevorgang stören würden. Es wäre jedoch auch möglich, dass andere Körper, auch Menschen, beispielsweise Kinder in einen Bereich der ersten Induktionsvorrichtung gelangen. Bevorzugt weist wenigstens die erste Induktionsvorrichtung eine Abschalteinrichtung auf, welche bei Erkennen eines Fremdkörpers eine Energiezufuhr an die Spuleneinrichtung der ersten Induktionsvorrichtung unterbricht. Mögliche Ausgestaltungen derartiger Erkennungsvorrichtungen sind in der DE 102015112431 B4 beschrieben. Der Offenbarungsgehalt dieser Anmeldung wird insbesondere auch zum Offenbarungsgehalt der vorliegenden Anmeldung gemacht. Insbesondere wird Bezug genommen auf die Absätze [0008]- [0016] der oben genannten Patentanmeldung.

Bei einer weiteren vorteilhaften Ausführungsform weist die erste Induktionsvorrichtung und/oder die zweite Induktionsvorrichtung eine Inverter- und/oder Gleichrichterschaltung auf. Bei der Ermöglichung einer bidirektionalen Energieübertragung wird bevorzugt die zweite Induktionsvorrichtung anstelle oder zusätzlich zu dem Gleichrichter einen Inverter auf, der das magnetische Wechselfeld erzeugt. Dabei ist es möglich, dass der Inverter in der ersten Induktionsvorrichtung als Gleichrichter fungiert.

Bei einer weiteren vorteilhaften Ausführungsform weist die erste Induktionsvorrichtung und/oder die zweite Induktionsvorrichtung eine Filtereinrichtung zum Filtern von elektromagnetischer Strahlung, also insbesondere einen sogenannten EMV-Filter, auf. Insbesondere weist die zweite Induktionsvorrichtung, welche an dem Kraftfahrzeug montiert ist, eine derartige Filtereinrichtung auf. Vorteilhaft weist die zweite Induktionsvorrichtung Befestigungsmittel auf, damit diese an der Unterseite eines Kraftfahrzeuges befestigt werden kann.

Bei einer weiteren vorteilhaften Ausführungsform weist die zweite Induktionsvorrichtung eine Begrenzungseinrichtung insbesondere für eingehende Ströme und/oder eine Netzfiltereinrichtung und/oder eine Leistungskorrektur-Filtereinrichtung (PFC) auf. Bevorzugt weist die zweite Induktionsvorrichtung sowohl eine Begrenzungseinrichtung als auch eine Netzfiltereinrichtung als auch eine Leistungskorrektur-Filtereinrichtung auf.

Bei einer weiteren vorteilhaften Ausführungsform weist die Ladeanordnung eine Kommunikationseinrichtung auf, welche einen Datenaustausch und insbesondere einen bidirektionalen Datenaustausch zwischen der ersten Induktionsvorrichtung und der zweiten Induktionsvorrichtung ermöglicht. Auf diese Weise können beispielsweise Induktionsvorrichtungen über bestimmte technische Daten kommunizieren, beispielsweise kann der ersten Induktionsvorrichtung mitgeteilt werden, von welchem Typ die zweite Induktionsvorrichtung ist, und beispielsweise welche Ladeströme eingesetzt werden können.

So kann die erste Induktionsvorrichtung eine Sende- und/oder Empfangseinheit aufweisen und auch die zweite Induktionsvorrichtung kann bevorzugt eine Sende- und/oder Empfangseinrichtung aufweisen. Diese Sende- und/oder Empfangseinrichtungen dienen insbesondere aber nicht ausschließlich dazu, eine bidirektionale Datenkommunikation zwischen den beiden Induktionsvorrichtungen herzustellen. Dabei können diese Kommunikationsvorrichtungen beispielsweise als Funksender und Funkempfänger ausgebildet sein. Es wäre jedoch auch ein Datenaustausch auf optischem Wege denkbar. Vorteilhaft handelt es sich bei wenigstens einer der Sende- und/oder Empfangseinheiten um eine WLAN-basierte Sende- und/oder Empfangseinheit. Es könnten jedoch auch Bluetooth-Verbindungen oder dergleichen eingesetzt werden.

Dabei ist es denkbar, dass wenigstens eine der beiden Induktionsvorrichtungen und bevorzugt beide Induktionsvorrichtungen eine Speichereinrichtung aufweist, in welcher eine Information gespeichert ist, welche diese Induktionseinrichtung eindeutig identifiziert. Die Sendeeinrichtung ist bevorzugt dazu geeignet und bestimmt, auch wenigstens zeitweise diese Information zu senden. Auf diese Weise ist es möglich, dass eine bestimmte Induktionsvorrichtung eindeutig identifiziert wird.

Weitere Vorteile und Ausführungsformen ergeben sich aus der beigefügten Zeichnung.

Darin zeigt:

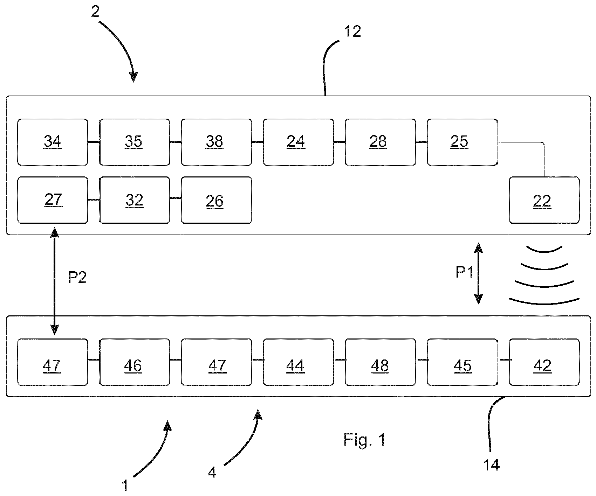

- Fig. 1: eine schematische Darstellung einer erfindungsgemäßen Vorrichtung.

Figur 1 zeigt eine schematische Darstellung einer erfindungsgemäßen Ladeanordnung 1. Diese Ladeanordnung 1 weist eine erste Induktionsvorrichtung 2 auf, welche beispielsweise stationär, etwa an einer Standsäule oder am Boden, angeordnet sein kann. Das Bezugszeichen 4 kennzeichnet die zweite Induktionsvorrichtung, welche insbesondere an einem Kraftfahrzeug angeordnet ist.

Beide Induktionsvorrichtungen können dabei jeweils Gehäuse 12 und 14 aufweisen, in denen die einzelnen elektronischen Komponenten angeordnet sind. Die erste Induktionsvorrichtung 2 weist eine Spule 22 auf, welche hier im Normalbetrieb als Sendespule dient, welche elektrische Energie an die Spule 42, welche in der zweiten Induktionsvorrichtung 4 angeordnet ist, übertragen kann. Der Doppelpfeil P1 zeigt jedoch an, dass eine Energieüberragung in beiden Richtungen möglich ist.

Die erste Induktionsvorrichtung 2 weist zunächst eine Eingangsbegrenzung (Inrush-Current Limiter-up) 34 auf. Hierbei handelt es sich um eine Komponente, die dazu dient, eingehende Ströme zu reduzieren, um auf diese Weise Beschädigungen nachfolgender elektronischer Komponenten zu verhindern, und um gleichzeitig zu verhindern dass etwa vorhandene Sicherungen die Stromzuführung deaktivieren. Als derartiges Begrenzungselement kann beispielsweise ein NTC (Negative Temperature Coefficient thermistor) eingesetzt werden. Daneben wäre auch die Verwendung von Widerständen denkbar.

Das Bezugszeichen 35 kennzeichnet eine Netzfilter-Einrichtung. Diese Netzfilter-Einrichtung diente insbesondere dazu, um die elektromagnetische Verträglichkeit der Anordnung gegenüber Störungen aus dem Stromnetz zu verbessern. Dabei kann diese Netzfilter-Einrichtung 35 beispielsweise einen Tiefpass aufweisen. Auch kann diese Netzfilter-Einrichtung beispielsweise passive Filterelemente aufweisen, wie etwa Wiederstände drosseln oder Kondensatoren.

Das Bezugszeichen 38 kennzeichnet einen Leistungsfaktor-Korrekturfilter (Powerfactor Correction). Diese Schaltung kann beispielsweise dazu dienen, den Leistungsfaktor zu erhöhen, damit dieser in einem gesetzlich vorgegebenen Bereich bleibt. Dabei kann es sich bei diesem Leistungsfaktor-Korrekturfilter beispielsweise um einen passiven Oberschwingungsfilter (Passive PFC) oder auch einen aktiven Oberschwingungsfiler (Aktive PFC) handeln. Als Komponenten kann dieser Leistungskorrekturfilter beispielsweise einen Gleichrichter mit einem nachgeschalteten oder bevorzugt direkt nachgeschalteten Aufwärtswandler aufweisen. Dabei kann beispielsweise ein derartiger Aufwärtswandler einen Kondensator auf eine Spannung oberhalb der Scheitelspannung der Netzwechselspannung aufladen.

Die Bezugszeichen 24 und 44 bezeichnen jeweils DC-DC-Wandler. Im Rahmen der Erfindung wird insbesondere vorgeschlagen, dass sowohl die erste Induktionsvorrichtung als auch die zweite Induktionsvorrichtung einen derartigen DC-DC-Wandler aufweisen. Dieser dient insbesondere auf beiden Seiten zur Leistungsregelung und Netzanpassung. Diese Wandler dienen wie allgemein bekannt dazu, um eine am Eingang zugeführte Gleichspannung in eine Gleichspannung mit höherem, niedrigerem oder invertiertem Spannungsniveau umzuwandeln. Dabei kann der Gleichstromwandler beispielsweise periodisch arbeitende elektronische Schalter oder ein oder mehrere Energieschalter aufweisen.

Das Bezugszeichen 48 kennzeichnet einen Gleichrichter bzw. Inverter.

Das Bezugszeichen 28 kennzeichnet ebenfalls einen Gleichrichter bzw. einen Inverter. Diese Gleichrichter bzw. Inverter dienen insbesondere dazu, um ein Wechselfeld zu erzeugen und/oder in eine Gleichspannung zu wandeln.

Die Bezugszeichen 25 und 45 kennzeichnen jeweils Resonanzkreise, die zum Betrieb der jeweiligen Spuleneinrichtungen 22 und 42 dienen. Dieser Resonanzkreis kann dabei elektrische Elemente wie Spulen oder Kondensatoren aufweisen.

Die Bezugszeichen 27 und 47 kennzeichnen Kommunikationsreinrichtungen, über welche die erste Induktionsvorrichtung und die zweite Induktionsvorrichtung miteinander kommunizieren können (Pfeil P2). Dabei kann es sich beispielsweise um WLAN-fähige Sender und Empfänger handeln. Über diese Einrichtungen können beispielsweise Signale und Daten ausgetauscht werden, beispielsweise Daten, über welche eine Positionierung der zweiten Induktionsvorrichtung 4 gegenüber der ersten Induktionsvorrichtung 2 erfolgt.

Das Bezugszeichen 32 kennzeichnet eine Fremdobjekterkennung, welche insbesondere Bestandteil der ersten Induktionsvorrichtung 2 ist. Diese kann, wie oben ausgeführt, bewirken, dass bei Auftreten von Fremdobjekten eine Leistungsversorgung des Kraftfahrzeugs unterbunden wird. Das Bezugszeichen 26 und entsprechend das Bezugszeichen 46 kennzeichnen Positionierungseinrichtungen, welche eine relative Positionierung der zweiten Induktionsvorrichtung 4 gegenüber der ersten Induktionsvorrichtung 2 ermöglichen.

Das Bezugszeichen 49 schließlich kennzeichnet eine Filtereinrichtung, um die elektromagnetische Verträglichkeit, insbesondere der zweiten Induktionsvorrichtung zu verbessern.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Ladeanordnung
- 2: erste Induktionsvorrichtung
- 4: zweite Induktionsvorrichtung
- 12, 14: Gehäuse
- 22, 42: Spule
- 26, 46: Objekterkennungseinrichtung
- 24, 44: DC-DC - Wandler
- 48: Gleichrichter / Inverter
- 49: Filtereinrichtung
- 25, 45: Resonanzkreis
- 27, 47: Kommunikationseinrichtung
- 28: Inverter
- 32: Fremdobjekterkennung
- 34: Eingangsbegrenzung
- 35: Netzfilter-Einrichtung
- 38: Leistungsfaktor-Korrekturfilter

- P1: Doppelpfeil
- P2: Kommunikation

## Patentansprüche

1. Induktive Ladeanordnung (1) für Kraftfahrzeuge mit einer ersten Induktionsvorrichtung (2), welche insbesondere stationär angeordnet ist und einer zweiten Induktionsvorrichtung (4), welche an einem Kraftfahrzeug montierbar ist,
wobei die erste Induktionsvorrichtung(2) eine erste Spuleneinrichtung (22) aufweist und die zweite Induktionsvorrichtung (4) eine zweite Spuleneinrichtung (42) und die erste Spuleneinrichtung (22) und die zweite Spuleneinrichtung (42) zur induktiven Energieübertragung geeignet und bestimmt sind,
**dadurch gekennzeichnet, dass**
die Ladeanordnung (1) sowohl eine induktive Energieübertragung von der ersten Spuleneinrichtung (22) zu der zweiten Spuleneinrichtung (42) als auch eine induktive Energieübertragung von der zweiten Spuleneinrichtung (42) zu der ersten Spuleneinrichtung (22) ermöglicht.

2. Induktive Ladeanordnung (1) nach Anspruch 1,
**dadurch gekennzeichnet, dass**
die erste Induktionsvorrichtung (2) eine erste Gleichspannungswandlereinrichtung (24) aufweist.

3. Induktive Ladeanordnung (1) nach wenigstens einem der vorangegangenen Ansprüche,
**dadurch gekennzeichnet, dass**
die zweite Induktionsvorrichtung (4) eine zweite Gleichspannungswandlereinrichtung (44) aufweist.

4. Induktive Ladeanordnung (1) nach wenigstens einem der vorangegangenen Ansprüche,
**dadurch gekennzeichnet, dass**
die erste Induktionsvorrichtung (2) und/oder die zweite Induktionsvorrichtung (4) einen Resonanzkreis (25, 45) aufweist.

5. Induktive Ladeanordnung (1) nach wenigstens einem der vorangegangenen Ansprüche,
**dadurch gekennzeichnet, dass**
wenigsten ein Resonanzkreis (25, 45) dazu geeignet und bestimmt ist, Energie mittels eines Wechselfeldes zu übertragen, dessen Frequenz größer ist als 30kHZ, bevorzugt größer als 50kHz, bevorzugt größer als 60kHz, bevorzugt größer als 70kHz und besonders bevorzugt größer als 80kHz und/oder dessen Frequenz kleiner ist als 200kHz, bevorzugt kleiner als 170kHz, bevorzugt kleiner als 150kHz, bevorzugt kleiner als 120kHz, bevorzugt kleiner als 100kHz und besonders bevorzugt kleiner als 90kHz.

6. Induktive Ladeanordnung (1) nach wenigstens einem der vorangegangenen Ansprüche,
**dadurch gekennzeichnet, dass**
die erste Induktionsvorrichtung (2) und/oder die zweite Induktionsvorrichtung (4) eine Positionserfassungseinrichtung (26, 46) aufweist, welche dazu geeignet ist, eine Relativposition der ersten Induktionsvorrichtung (2) gegenüber der zweiten Induktionsvorrichtung (4) zu erfassen.

7. Induktive Ladeanordnung (1) nach wenigstens einem der vorangegangenen Ansprüche,
**dadurch gekennzeichnet, dass**
wenigstens eine Induktionsvorrichtung (2, 4) und bevorzugt die erste Induktionsvorrichtung (2) eine Erkennungseinrichtung (32) zum Erkennen von Fremdobjekten aufweist.

8. Induktive Ladeanordnung (1) nach wenigstens einem der vorangegangenen Ansprüche,
**dadurch gekennzeichnet, dass**
die erste Induktionsvorrichtung (2) und/oder die zweite Induktionsvorrichtung (4) einen Inverter und/oder Gleichrichtereinrichtung (28, 48) aufweist.

9. Induktive Ladeanordnung (1) nach wenigstens einem der vorangegangenen Ansprüche,
**dadurch gekennzeichnet, dass**
die erste Induktionsvorrichtung (2) und/oder die zweite Induktionsvorrichtung (4) eine Filtereinrichtung (34) zum Filtern von elektromagnetischer Strahlung (EMV-Filter) aufweist.

10. Induktive Ladeanordnung (1) nach wenigstens einem der vorangegangenen Ansprüche,
**dadurch gekennzeichnet, dass**
die zweite Induktionsvorrichtung (4) eine Inrush-Begrenzungseinrichtung (36) und/oder eine Netzfiltereinrichtung (38) und/oder eine Leistungskorrekturfiltereinrichtung (PFC) (38) aufweist.

11. Induktive Ladeanordnung (1) nach wenigstens einem der vorangegangenen Ansprüche,
**dadurch gekennzeichnet, dass**
die Ladeanordnung (1) eine Kommunikationseinrichtung (27,47) aufweist, welche einen Datenaustausch und insbesondere einen bidirektionalen Datenaustausch zwischen der ersten Induktionsvorrichtung (2) und der zweiten Induktionsvorrichtung (4) ermöglicht.
